# EUROPEAN PATENT APPLICATION

(11) **EP 4 610 532 A1**
(43) Date of publication of application: **03.09.2025**
(21) Application number: 25159885.0
(22) Date of filing: 25.02.2025
(51) Int. Cl.: F16L 5/10, H02G 3/22

(54) **A RENOVATION COLLAR**

(30) Priority: 01.03.2024 DK PA202470067
(71) Applicant: DAFA Building Solutions A/S, 8220 Brabrand (DK)
(72) Inventor: DALGAARD, Jan, 8220 Brabrand (DK)
(74) Representative: Chas. Hude A/S

(57) **Abstract**

The present invention relates to a renovation collar for sealing lead-ins of cables, pipes, and tubes through a vapour barrier. The renovation collar comprises a sheet-like flexible material having a first side and a second side, a central opening , a periphery, where a part of the periphery on the first side is applied with adhesive covered with removable tape and wherein the sheet-like flexible material is self-vulcanizing and where a cut is provided through the sheet-like material from the central opening to the periphery.

## Description

### Technical Field

The present invention relates to a renovation collar for sealing lead-ins of cables, pipes, and tubes through a vapour barrier. The invention also relates to the use of the renovation collar for sealing lead-ins through a vapour barrier.

### Background

The indoor climate is of importance for the health and well-being of the persons and animals staying or residing inside the building. Furthermore, the durability of building materials composed of organic material such as wood is prolonged by preventing warm moistures air to travel from places with high temperatures to places with lower temperatures.

Problems arise when there is a significant temperature or vapour pressure differential from inside to out, which especially in northern climates may be a problem. Interior or exterior moisture penetrates into and condenses in unheated attics, basements, crawl-spaces, and wall cavities and causes the rotting of wood members, mould and fungus growth, and peeling or lifting of exterior paint.

Installing a vapour barrier membranes prevents moisture from penetrating from the inside or outside to a place where it reaches a dew point since the vapour barrier physically prevents the moistures air in travelling. The efficiency of the vapour barrier is dependent upon the mounting of the vapour barrier. Incorrect mounting or leaking due to torn vapour barrier is more damaging than lack of vapour barrier since leakage may lead to an air flow through the membrane. The air will typically contain moisture, which moisture may condensate in the insulation material and thereby render the insulation useless in an area around the leak, which may give rise to a thermal bridge, rot or other detrimental effects. Thus, it is a must that all lead-ins through the vapour barrier are efficiently sealed in order to prevent air transport and airtightness according to building regulations.

Sealing of lead-ins is traditionally performed by the use of vapour barrier tape. However, this method is time-demanding and difficult for obtaining aesthetic and airtight fittings, especially on round or oval lead-ins.

When building new buildings lead-ins like pipes, wires and tubes are mounted and can be sealed off during mounting by means of sealing collars which are known.

However, when renovating buildings and establishing new vapour barriers the known sealing collars cannot be used for the existing pipes and wires, and they have to be sealed by means of sealing tape which are taped to the vapour barrier and wrapped around the pipes or wires to seal them. This is a cumbersome and labour intensive process if sufficient sealing should be achieved, therefore, there is demand for more efficient solutions.

### Disclosure of the Invention

An aspect of the present invention is to provide a collar for sealing which can be used for sealing the passage of existing pipes, wires and tubes through a vapour barrier which has been established in an existing building

Consequently, in an aspect the invention relates to a renovation collar for sealing lead-ins of cables, pipes, and tubes through a vapour barrier, said renovation collar comprises a sheet-like flexible material having a first side and a second side, a central opening , a periphery, where a part of the periphery on the first side is applied with adhesive covered with removable liner and wherein the sheet-like flexible material is self-vulcanizing and where a cut is provided through the sheet-like material from the central opening to the periphery and wherein the sheet-like flexible material is able to overlap.

The renovation collar is for use when renovating vapour barriers in existing buildings with existing pipes and wiring. In particular when renovating buildings where the existing pipes and wiring cannot be peeled off and reinstalled.

In the following the terms "pipe", "tube", "cable" and "wire" and their plural forms are used interchangeably.

The renovation collar is made from sheet-like flexible material which is self-vulcanizing. Self-vulcanizing material is also sometimes denoted as self-amalgamating material or self-fusing material. Self-vulcanizing is a technique that vulcanizes without the application of heat. The physical properties of natural or synthetic rubber are improved; finished rubber has higher tensile strength and resistance to swelling and abrasion, and is elastic over a greater range of temperatures Self-vulcanizing material is e.g. used in tape, typically used to protect connections in telecommunications data transmission systems. It is an extremely versatile material, an excellent electrical insulator, with a high resistance to moisture and chemicals, weathering and UV rays. Its properties, when correctly applied, provide watertight connections in damp locations over a wide range of temperatures.

The self-vulcanizing properties makes it possible to make layers of the sheet-like material adhere to each other and form watertight connections.

According to the invention a part of the periphery of the first side is applied with an adhesive which is intended to adhere the renovation collar to the vapor barrier. During storage the adhesive is covered with removable liner of e.g. paper or plastic material which can be pulled off when the renovation collar is to be used.

The cut provided through the flexible sheet-like material from the central opening to the periphery makes it possible to mount the renovation collar on existing pipes and wiring. The renovation collar is preferably mounted in such a way that part of the material of the collar (near the opening) rests or lies on the pipe or the wire so that part of the pipe or wire is encapsulated in flexible sheet-like material. In this manner it is possible to obtain a tight sealing by means of the renovation collar.

When the flexible sheet-like material is mounted on pipes and wiring it is closed with the overlap such that the overlap is in connection with the cut provided through the sheet-like material, and preferable the sheet-like material overlap by at least 2 cm.

When the renovation collar is mounted on a pipe or wire the sheet-like flexible material on both sides of the cut should be able to overlap each other, i.e. from the first side and from the second side or both from either the first or the second side, preferable by at least 2 cm. Thus in an embodiment, a part the first side on both side of the cut can be pressed together to form an assembly which will react with self-vulcanizing.

Thus, in an embodiment of the renovation collar the sheet-like flexible material on either side of the cut and around a pipe or wire can be brought into contact and stick together by self-vulcanization. In this manner the renovation collar is able to provide tight sealing around the pipe or wire in a lead-in through a vapour barrier.

A number of self-vulcanizing materials are suitable for the sheet-like flexible material, and in an embodiment of the renovation collar the sheet-like flexible material is selected from polyisobutylene, ethylene propylene rubber, ethylene propylene diene monomer, and silicone elastomer.

The renovation collar according to the invention should be able to seal all kinds of pipes, wires and tubes lead-ins in a vapour barrier and in an embodiment of the renovation collar the central opening is substantial circular with a diameter of from about 2 mm to about 150 mm, such as a diameter from about 4 mm to about 130 mm. Thus, the renovation collar is capable or encapsulate and seal most pipes, wires and tubes with standard diameters.

Moreover, the renovation collar according to invention provides embodiments where the periphery of the sheet-like flexible material is substantially circular with a diameter from about 100 mm to about 320 mm, such as a diameter from about 115 mm to about 300 mm. Such circular shape and sizes makes the renovation collar useful in most buildings.

To cover most of the used standard pipes and wires the renovation collar can be made with circular shapes in the following four sizes (Ø denotes diameter). The diameters of the wire/pipe and pipe are the outer diameter.

| | |
|---|---|
| Ø115 mm with Ø4 mm opening - | for wire/pipe from Ø5 mm to Ø20 mm |
| Ø160 mm with Ø25 mm opening - | for pipe from Ø30 mm to Ø50 mm |
| Ø250 mm with Ø75 mm opening - | for pipe from Ø80 mm to Ø125 mm |
| Ø300 mm with Ø130 mm opening - | for pipe from Ø140 mm to Ø180 mm |

When the renovation collar is mounted in e.g. a pipe and a vapour barrier the renovation collar preferably should cover a part of the pipe or wire and a part of the vapour barrier to provide a proper sealing. Preferably a rim with at least a 2 cm width of sheet material should cover the pipe or wire. This is also the reason why the opening in the renovation collar is smaller than the diameter of the pipe or wire for which the renovation collar is intended.

In the embodiments above the renovation collar has a substantially circular shape, i.e. meaning that the periphery is substantially circular and the central opening is substantially circular. Of course it will possibly be to make the renovation collar with other sizes and shapes if required e.g. oval, square, hexagonal or other desired shape.

To obtain the best possible properties in respect of flexibility and durability of the renovation collar according to the invention, the sheet-like flexible material has a thickness in the range from about 0,5 mm to about 3 mm, such as in the range from about 0,5 mm to about 2 mm. In an embodiment the renovation collar has a thickness of 1 mm +/- 0,2 mm, which provides a good flexibility and durability of the renovation collar.

In an embodiment of the renovation collar the first side of the sheet-like flexible material is covered with a removable protective layer in the area with no removable liner. Thus, a protective layer protects the sheet-like flexible material on the side which has to face the vapour barrier during storage of the renovation collar, such that undesirable contamination and impurities on the layer are avoided. When the renovation collar is about to be used the protective layer is removed.

The second side of the renovation collar may also be covered by a protective layer during storage. When the renovation collar is to be installed the protective layer can be removed such that the sheet-like flexible material is exposed to the environment and it is possible to make an overlap between the first side and the second side.

In an embodiment of the renovation collar the adhesive is an acrylic based adhesive. The acryl-containing adhesive is a highly sticky adhesive, which is especially developed for sealing and laminating vapour barriers. Furthermore, the adhesive is known to be stable within a wide temperature range, such as from -40 to +100 degrees Celsius. The adhesive is hence widely known and tested in accordance with the regulations regarding vapour barriers. The adhesive is available, e.g. in the form of vapour barrier tape as distributed by DAFA.

In a further aspect the present invention also relates to the use of the renovation collar as described above for sealing the lead-ins of cables, pipes and tubes drawn through the vapour barrier for avoiding leakage of the vapour barrier due to the lead-ins. The renovation collar is highly useful during renovations of buildings where the vapour barrier must be replaced.

The present invention provides a solution for sealing lead-ins through a vapour barrier during a renovation process where it has been realized that the use self-vulcanizing material facilitates the sealing. The renovation collar according to the invention can be used in environments with temperatures ranging from -60 to +80 degrees Celsius, and the renovation collar an UV stability of at least 5000 h (EN 1297).

### Brief Description of the Drawing(s)

The invention is explained in detail below with reference to the drawing, in which
Fig. 1 illustrates a renovation collar according to the invention;
Fig. 2 illustrates a renovation collar which is partly activated; and
Fig. 3 illustrates a renovation collar mounted on a pipe and vapour barrier.

The figures are only intended to illustrate the principles of the invention and may not be accurate in every detail. Moreover, details which are not part of the invention may have been omitted. The same reference numbers are used for the same parts.

### Detailed description of the Invention

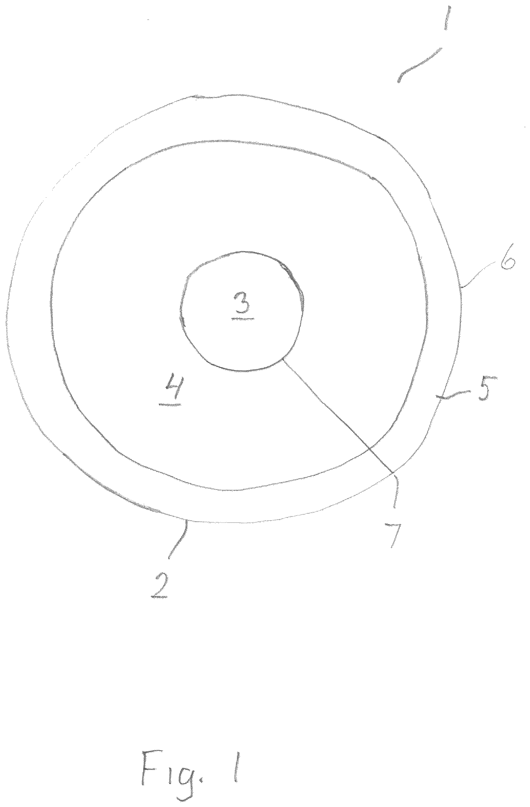

Figure 1 illustrates a renovation collar 1 according to the invention seen from the first side. The renovation collar 1 has a substantially circular shape and comprises a sheet 2 made of polyisobutylene which in the central part has a circular opening 3.

From the opening 3 and towards the periphery 6 of the sheet 2, the renovation collar 1 is covered with a protective layer 4 and along the periphery 6 the sheet 2 has a removeable liner 5 which cover an adhesive applied at the periphery 6 of the sheet 2. The adhesive is an acryl-containing adhesive which is a highly sticky adhesive. A cut 7 is also provided in the sheet 2 from the opening 3 to the periphery 6. The cut 7 allows the renovation collar to be mounted on a pipe or wire without the need for dismantling the pipe or wire.

The second side of the renovation collar which is not visible in the figure is in this embodiment the sheet material itself, i.e. the sheet 2 of polyisobutylene is not covered with a protective cover in this embodiment.

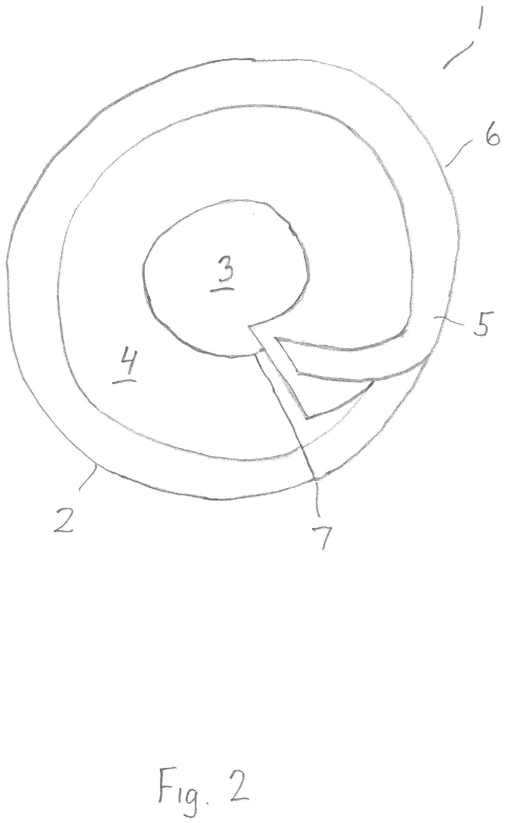

Figure 2 shows how the renovation collar is activated just before mounting by removing the protective layer 4 and the liner 5. The protective layer is removed from one side of the cut 7 and loosened from the first side around the sheet 2 to the other side of the cut 7, whereby the protective layer 4 is removed. Substantially the same procedure is used for removing the liner 5. Normally the protective layer 4 will be removed before the liner 5, as the liner 5 will be removed during adhesion of the renovation collar 1 to a vapour barrier.

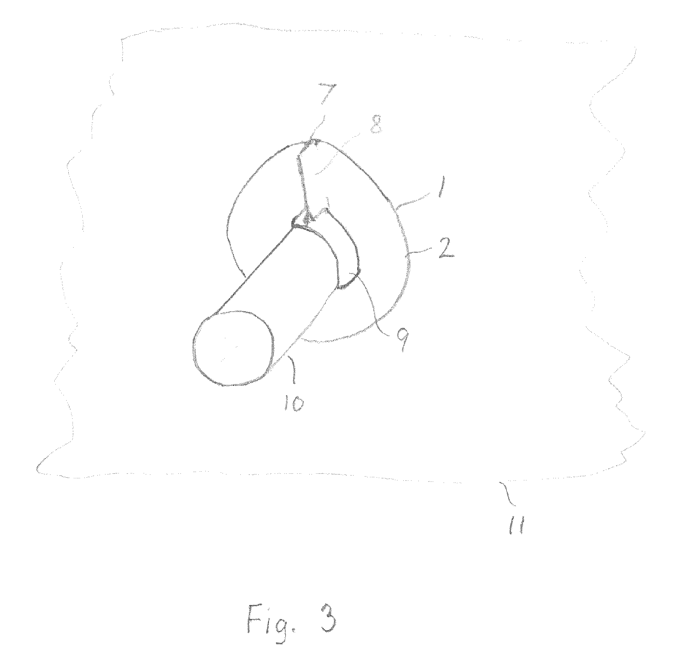

Figure 3 shows the renovation collar 1 when it has been mounted on a vapour barrier 11 to seal the let-in of the pipe 10 through the vapour barrier. The first side of the sheet 2 is partly adhered to the vapour barrier 11 and partly adhered to the surface of the pipe 10. At the cut 7 a part of the sheet is assembled to form an overlapping assembly 8 which also serve to seal the let-in of the pipe 10. A rim 9 of the renovation collar surrounds the pipe 10 and contributes to a tight seal of the let-in through the vapour barrier 11. When the renovation collar has been mounted the self-vulcanizing process of the sheet material is initiated and will continue through hours and even days and end up with a very tight sealing which will stop moisture and vapour from penetrating the vapour barrier.

## Claims

1. A renovation collar for sealing lead-ins of cables, pipes, and tubes through a vapour barrier, said renovation collar comprises a sheet-like flexible material having a first side and a second side, a central opening , a periphery, where a part of the periphery on the first side is applied with adhesive covered with removable liner and wherein the sheet-like flexible material is self-vulcanizing and where a cut is provided through the sheet-like material from the central opening to the periphery and wherein the sheet-like flexible material is able to overlap.

2. A renovation collar according to claim 1, wherein the overlap is in connection with the cut provided through the sheet-like material, and preferable the sheet-like material overlap by at least 2 cm.

3. A renovation collar according to claim 1 or 2, wherein the sheet-like flexible material is selected from polyisobutylene, ethylene propylene rubber, ethylene propylene diene monomer, silicone elastomer

4. A renovation collar according to anyone of the preceding claims, wherein the sheet-like flexible material on either side of the cut can be brought into contact and stick together by self-vulcanization.

5. A renovation collar according to anyone of the preceding claims, wherein the central opening is substantial circular with a diameter of from about 2 mm to about 150 mm, such as a diameter from about 4 mm to about 130 mm.

6. A renovation collar according to anyone of the preceding claims, wherein the periphery of the sheet-like flexible material is substantially circular with a diameter from about 100 mm to about 320 mm, such as a diameter from about 115 mm to about 300 mm.

7. A renovation collar according to anyone of the preceding claims, wherein the sheet-like flexible material has a thickness in the range from about 0,5 mm to about 3 mm, such as in the range from about 0,5 mm to about 2 mm.

8. A renovation collar according to anyone of the preceding claims, wherein the first side of the sheet-like flexible material is covered with a removable protective layer in the area with no removable liner.

9. A renovation collar according to anyone of the preceding claims, wherein the adhesive is an acrylic based adhesive.

10. Use of a renovation collar according to any of the claims 1-9 for sealing the lead-ins of cables, pipes and tubes drawn through the vapour barrier for avoiding leakage of the vapour barrier due to the lead-ins.
